# EUROPÄISCHE PATENTSCHRIFT

(11) **EP 1 085 213 B1**
(45) Veröffentlichungstag und Bekanntmachung des Hinweises auf die Patenterteilung: **17.11.2004**
(21) Anmeldenummer: 00119886.0
(22) Anmeldetag: 13.09.2000
(51) Int. Cl.: F04D 13/06, F04D 29/62, F04D 29/58, H02K 7/14, H02K 5/128, F04D 29/02

(54) **Nassläuferpumpe mit Montageplatte**
Wet rotor motorpump with mounting plate
Motopompe à rotor noyé et plaque de montage

(30) Priorität: 13.09.1999 DE 19943862
(43) Veröffentlichungstag der Anmeldung: 21.03.2001
(73) Patentinhaber: WILO AG, 44263 Dortmund (DE)
(72) Erfinder: Materne, Thomas, 59348 Lüdinghausen (DE); Stephan, Waldemar, 44319 Dortmund (DE); Genster, Albert, 45768 Marl (DE)
(74) Vertreter: COHAUSZ DAWIDOWICZ HANNIG & PARTNER

(56) Entgegenhaltungen:
- DE-A- 1 909 878
- DE-A- 19 527 879
- US-A- 3 433 164
- US-A- 4 234 293
- US-A- 5 494 417
- US-A- 5 785 013

## Beschreibung

Die vorliegende Erfindung betrifft eine elektrisch betriebene Kreiselpumpe, insbesondere für den Einsatz in Heiz- und/oder Kühlkreisläufen, mit einem Pumpengehäuse, das eine das Laufrad aufnehmende Laufradkammer stirnseitig bedeckt, mit einem von Wicklungen umgebenen Stator und mit einer einstückigen Montageplatte, die einerseits das Pumpengehäuse und andererseits den Stator trägt und die Mittel zur Halterung der Pumpe aufweist.

Derartige insbesondere als Naßläufer ausgebildete Kreiselpumpen sind seit langem hinlänglich bekannt. Diese Pumpen werden in ihren Einzelkomponenten gefertigt und entsprechend montiert. Neben den Pumpen mit großer Leistung, die wegen ihres Gewichtes auf einem Sockel gelagert werden müssen, gibt es kleine Pumpen, z.B. Brauchwasserpumpen, die direkt an dem System, das sie versorgen, angebracht werden können. Meist dient als tragendes Element ein entsprechend stabil konzipiertes Pumpengehäuse, das die anderen Komponenten aufnimmt und das mit Befestigungsmitteln am System, beispielsweise über einen Anschlußflansch, gehalten wird.

Außerdem sind Pumpen bekannt, deren tragendes Teil das Pumpengehäuse ist, das auf der elektrischen Seite einen Spalttopf ausbildet. Bei diesen Pumpen wird der Stator auf dem Spalttopf gehalten. Diese besondere Bauart ist nur bei vergleichsweise kleinen Pumpen möglich, die zudem keiner aufwendigen Ansteuerelektronik bedürfen und lediglich mittels eines herkömmlichen Synchron- oder Asynchronantriebes betrieben werden. Die Einsatzmöglichkeiten dieser Pumpen ist somit beschränkt. Solche Kreiselpumpen sind bekannt aus z.B. DE-A-1 909 878, US-A-3 433 164.

Generell ist es bei den bekannten Pumpen nachteilig, daß sie wegen der großen Zahl der Einzelkomponenten mit einem vergleichsweise hohen Montageaufwand gefertigt werden, was zu einer Erhöhung der Herstellungskosten beiträgt. Die bekannten Pumpen weisen außerdem eine Vielzahl von Metallteilen auf, die nach der Herstellung zunächst einer mechanischen Nacharbeit bedürfen, wodurch die Herstellungskosten belastet werden. In ihrer Konstruktion sind die herkömmlichen Pumpen auch auf eine bestimmte Bauart und Leistung ausgelegt, so daß für jedes Einsatzgebiet eine separate Baugröße vorgesehen werden muß. Ein weiterer Nachteil ist, daß die Pumpen unkomfortabel zu warten und zu reparieren sind, da die kritischen Komponenten schwer zugänglich sind.

Aufgabe der vorliegenden Erfindung ist es, eine Kreiselpumpe zu schaffen, die aus einfach herzustellenden Komponenten modular aufgebaut ist und die sich bei kostengünstiger Fertigung durch ein hohes Maß an Zuverlässigkeit auszeichnet.

Diese Aufgabe wird durch eine Kreiselpumpe nach Anspruch 1 gelöst.

Grundlegende Idee der erfindungsgemäßen Pumpe ist die einteilige Montageplatte, an der sowohl die hydraulischen als auch die elektrischen Komponenten montiert werden. Dabei sind die unmittelbar auf der Montageplatte zu montierenden wesentlichen Komponenten einerseits das Pumpengehäuse auf der hydraulischen Seite und andererseits der Stator mit seinem Statorblechpaket auf der elektrischen Seite. Diese somit als Chassis ausgebildete Montageplatte erlaubt außerdem die komplette Halterung der Pumpe am System. Erfindungsgemäß hat die Montageplatte eine senkrecht zur Welle des Laufrades ausgerichtete und insbesondere rotationssysmmetrische Basisplatte, die eine Wand der Laufradkammer bildet. Zudem hat die Montageplatte eine Aufnahme zur Zentrierung und vorteilhafterweise zur ausschließlichen Halterung des Stators, die an die der Laufradkammer abgewandten Seite der Basisplatte angeformt ist. In einer vorteilhaften Ausführungsform ist der Stator in den die Aufnahme bildenden Zylinder einpreßbar. So ist der Stator auf einfache Weise gehalten und gleichzeitig in axialer und radialer Richtung zentriert.

Ein genereller Vorteil der erfindungsgemäßen zylindrischen Aufnahme ist, daß ohne weiteres verschieden lange Statoren einsetzbar sind. Eine mit einer derartigen Halterung ausgestattete Basisplatte ist universell und läßt sich für verschiedene Pumpentypen einsetzen.

Die erfindungsgemäße Montageplatte bildet in der Art eines Lagerschildes mit einer Fläche die motorseitige Wand der Laufradkammer und dient mit ihrer anderen Seite, auf der die Aufnahme angebracht ist, den elektrischen Komponenten als Auflage. Der besondere Vorteil dieser Montageplatte mit Basisplatte und Aufnahme ist, daß sie in Ihrem Kontakt zum Pumpmedium eine Wärmesenke bildet, über die die Ansteuerelektronik Wärme abführen kann. Dabei ist es vorteilhaft, die Ansteuerelektronik in einem Elektronikmodul unterzubringen und dieses direkt auf der der Laufradkammer abgewandten Fläche der Basisplatte zu montieren. Somit ist eine optimale Kühlung des Motors und der Elektronik gewährleistet. Dieser Vorteil kommt vor allem bei den Pumpen zur Geltung, deren Steuerelektronik eine Vielzahl an Leistungshalbleitern aufweist, die viel Abwärme produzieren.

Vorteilhafterweise wird die Montageplatte mit Basisplatte und Aufnahme aus Metall gefertigt, um eine hohe Stabilität bei vergleichsweise geringem Gewicht zu erhalten. Sie wird aus Blech gezogen oder im Druckgußverfahren hergestellt. Mit der erfindungsgemäßen Montageplatte können durch Wechseleinsätze im Druckgußwerkzeug unterschiedliche mechanische Anschlußvarianten realisiert werden. Die Montageplatte unterstützt dabei den vollständig modularen Aufbau der Pumpe.

Besonders vorteilhaft läßt sich die Erfindung bei Pumpen einsetzen, die von elektronisch kommutierten Gleichstrommotoren betrieben werden. Auf zusätzliche Kühlelemente kann wegen der vorteilhaften Möglichkeit der Wärmeabfuhr über die Basisplatte verzichtet werden. Die Baugröße der Pumpe kann dadurch reduziert werden, daß der Anschlußstecker für die elektrische Versorgung auf der dem Laufrad zugewandten Seite der Basisplatte angebracht ist. Diese Anbringung vereinfacht den Anschluß Versorgungsleitung.

Vorteilhafterweise ist die insbesondere rotationssymmetrische Basisplatte mit einer koaxial zur Laufradwelle ausgerichteten zentralen Bohrung versehen, die zur Aufnahme des Lagers dient. Statt die Lagerbuchse direkt in dieser Bohrung zu halten ist es vorteilhaft, in die Bohrung einen insbesondere aus Kunststoff gefertigten Lagerträger einzusetzen, der seinerseits eine Bohrung zur Aufnahme der Lagerbuchse aufweist. Auf diese Weise kann die zentrale Bohrung ausreichend groß konzipiert werden, um ein Durchstecken des Rotors und eines den Rotor umgebenden Spalttopfes zu ermöglichen. Die erfindungsgemäße zentrale Bohrung trägt so zur Vereinfachung der Montage bei. Zur Führung und zur Halterung des Lagerträgers ist es vorteilhaft, die zentrale Bohrung auf der elektrischen" Seite mit einer umgebenden Aufnahmehülse zu versehen, in die der Lagerträger eingepreßt ist und/oder durch Rastmittel gehalten ist.

Der erfindungsgemäße Pumpenaufbau läßt sich besonders vorteilhaft bei Naßläuferpumpen einsetzen, deren Rotor vom Stator durch einen Spalttopf getrennt ist. Um die Montage derartiger Pumpen zu vereinfachen, ist es vorteilhaft die Aufnahmehülse mit einem nach Innen gerichteten Kragen zu versehen, der einem entsprechend nach Außen gerichteten am offenen Boden des Spalttopfes befindlichen Kragen eine Anlage bietet. Der Spalttopf wird einfach von der hydraulischen" Seite in die Aufnahmehülse eingeschoben bis beide Kragen vermittels eines Dichtringes zur Anlage kommen. Der Halt des Spalttopfes wird durch den Lagerträger gewährleistet, der nachfolgend eingeschoben wird und in seiner endgültigen eingerasteten Position den Kragen des Spalttopfes mit Druck beaufschlagt und somit gegenüber dem elektrischen Teil der Pumpe abdichtet. Die Zentrierung des insbesondere aus Kunststoff gefertigten Spalttopfes geschieht dabei vorteilhafterweise durch eine zylindrische Wandung des Lagerträgers, die in den Spalttopf hineinragt.

Vorteilhafterweise ist auf die Basisplatte ein, insbesondere aus Kunststoff geformter, Gehäusedeckel aufsetzbar, der die auf der elektrischen Seite der Basisplatte angeordneten Komponenten vollständig abdeckt. Dieser besonders leichte Gehäusedeckel liegt vorteilhafterweise an der Außenfläche des den Stator aufnehmenden Zylinders an und kann durch Rasthaken an der Basisplatte befestigt werden oder mit der Basisplatte verschraubt werden. Es ist vorteilhaft, in der hinteren Stirnseite des Deckels eine Aufnahme vorzusehen, die den Spalttopf fixiert und zentriert.

In einer zu bevorzugenden Ausführungsform wird das Pumpengehäuse dadurch realisiert, daß eine insbesondere aus Kunststoff gefertigte Gehäuseschale, welche Teile der Spiraloder Laufradkammer bildet, auf die Basisplatte aufgesetzt und über einen Dichtring abgedichtet ist. Die Befestigung der Gehäuseschale geschieht vorteilhafterweise mittels selbstschneidender Schrauben. Es ist besonders vorteilhaft, daß an dieselbe Basisplatte Gehäuseschalen mit verschiedenen Anordnungen von Saug- und Druckstutzen angebracht werden können. Es ist auch vorteilhaft, die Gehäuseschale in regelmäßigen Abständen auf dem Teilkreisdurchmesser mit Kernbohrungen zu versehen, so daß sich die Gehäuseschale und damit der Druckstutzen dem Kundenwunsch entsprechend in verschiedenen Richtungen montieren läßt. Unterschiedliche Anordnungen der Stutzen lassen sich einfach durch Wechseleinsätze im Spritzwerkzeug realisieren. So lassen sich unterschiedliche Kundenwünsche erfüllen. Eine Optimierung der Spiralraumgeometrie läßt sich über Einsätze erreichen, die zwischen die Gehäuseschale und die Basisplatte geklemmt werden. Durch die beschriebene Bauweise wird die Zahl der Dichtungen und damit die Gefahr von Leckagen reduziert.

Die axiale Lagerung der rotierenden Komponenten geschieht über ein axiales Gleitlager, dessen Gleitring an der laufradseitigen Stirnfläche des Stators gehalten ist und gegen die Lagerbuchse läuft oder über die Stirnseite des Laufrades, das gegen eine die zentrale Ansaugöffnung umgebende Kante läuft.

In der günstigsten Form hält und zentriert die erfindungsgemäße Montageplatte mit Basisplatte und Aufnahme sämtliche Komponenten der Pumpe, so daß die Pumpe keiner weiteren tragenden Teile bedarf. Das führt zu einer enormen Einsparung an Bauteilen und damit an Herstellungskosten. Gleichzeitig steigt die Zuverlässigkeit der Pumpe. Der Aufbau der Pumpe begünstigt die axiale Montage.

Wegen des einfachen, kompakten und gleichzeitig modularen Aufbaus der Pumpen lassen sich diese besonders gut im Kühlkreislauf von Kraftfahrzeugen einsetzen. Dieses Einsatzgebiet wird zudem dadurch begünstigt, daß sich die erfindungsgemäßen Pumpen wegen der Reduzierung der Bauteile besonders kostengünstig fertigen lassen. Die geringe Zahl der Bauteile geht dabei mit einer entsprechenden Erhöhung der Betriebssicherheit einher. Die Fertigungskosten werden zudem durch das einfache Zusammenfügen der Bauteile Montage in einer Richtung gesenkt. Die Wartung und Reparatur der Pumpen ist entsprechend einfach.

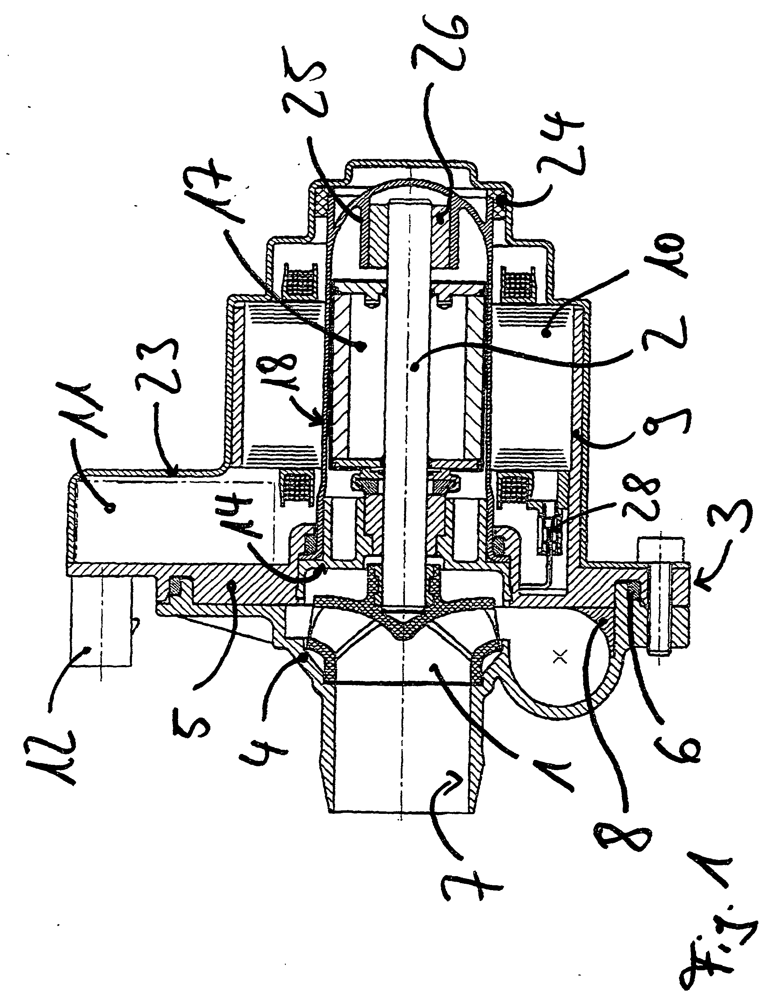

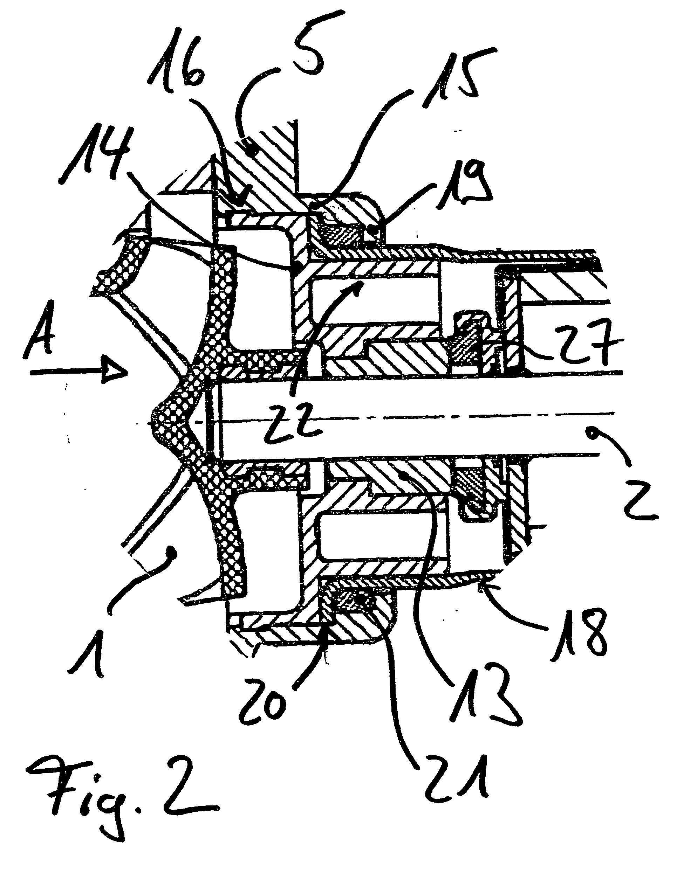

Eine besondere Ausführungsform der erfindungsgemäßen Kreiselpumpe ist in der Figuren 1 und 2 dargestellt und wird im folgenden näher beschrieben. Es zeigen:
- **Figur 1:**: eine erfindungsgemäße Pumpe und
- **Figur 2:**: eine Detailansicht der erfindungsgemäßen Pumpe.

In Figur 1 ist eine elektrisch betriebene Kreiselpumpe, deren Laufrad 1 auf einer Welle 2 mit aufgepreßtem permanentmagnetischem Rotor 17 gehalten ist, dargestellt. Die Kreiselpumpe hat eine einteilige Montageplatte 3 aus Metall, die auf ihrer hydraulischen" Seite eine die Laufradkammer abdeckende aus Kunststoff gefertigte Gehäuseschale 4 trägt.

Dabei ist die auf die senkrecht zur Welle 2 ausgerichtete Basisplatte 5 der Montageplatte 3 aufgesetzte Gehäuseschale 4 über einen Dichtring 6 abgedichtet. Die Gehäuseschale 4 weist einen Saugstutzen 7 und einen nicht dargestellten Druckstutzen auf. Im Spiralraum liegt zur Verbesserung der hydraulischen Eigenschaften ein Element 8 ein.

Die Montageplatte 3 weist auf der dem Laufrad 1 abgewandten elektrischen" Seite der Basisplatte 5 eine Aufnahme 9 auf, die zur Halterung des Stators 10 an die Basisplatte 5 angeformt ist. Die Aufnahme wird dabei von einem koaxial zur Welle 2 an die Basisplatte angeformten Zylinder gebildet, in den der Stator eingesetzt, insbesondere eingepreßt, ist. Auf der elektrischen Seite ist ein Elektronikmodul 11 in Wärmekontakt auf die Basisplatte 5 aufgesetzt, das eine Steuerelektronik für den Motor aufweist. Das Elektronikmodul 11 wird über einen Anschlußstecker 12 kontaktiert, der auf der hydraulischen Seite der Basisplatte 5 anbracht ist.

Die Basisplatte 5 weist eine zur Welle 2 koaxiale zentrale Bohrung auf, in der ein die Lagerbuchse 13 (Figur 2) aufnehmender Lagerträger 14 gehalten ist. Die zentrale Bohrung ist von einer an die Basisplatte 5 angeformte Hülse 15 umgeben, in welcher der Lagerträger 14 eingesetzt und durch Rastmittel 16 gehalten ist. In der Hülse 15 ist zudem ein aus Kunststoff geformter Spalttopf 18 gehalten. Die Halterung des Spalttopfes 18 geschieht dadurch, daß die Hülse 15 einen nach Innen gerichteten Kragen 19 aufweist gegen den ein nach Außen gerichteter Kragen 20 des in Pfeilrichtung A eingeschobenen Spalttopfes 18 vermittels eines Dichtringes 21 zur Anlage kommt. Der Kragen 20 des Spalttopfes 18 wird von dem in der Hülse 15 eingerasteten Lagerträger 14 gegen den Dichtring 21 druckbeaufschlagt. Der Lagerträger 14 hat eine zylindrische Wandung 22, auf die der Spalttopf 18 aufgeschoben und damit zentriert ist. Die axiale Lagerung der Welle 2 geschieht durch ein Axiallager, dessen Gleitring 27 an der Stirnseite der Lagerbuchse 13 angreift.

Wie in Figur 1 zu erkennen, ist auf die Basisplatte 5 ein, aus Kunststoff geformter Gehäusedeckel 23 aufgesetzt, der alle auf der elektrischen Seite der Basisplatte 5 angeordneten Komponenten abdeckt und damit den Motordeckel bildet. Der Gehäusedeckel 23 liegt an der Außenfläche des den Stator 10 aufnehmenden Zylinders 9 an und wird gemeinsam mit der Gehäuseschale 4 an der Basisplatte 5 verschraubt. An seiner inneren Stirnseite weist der Gehäusedeckel 23 eine Aufnahme 24 auf, in die der Spalttopf 18 einsetzbar ist. An die Innenseite des Spalttopfes 18 ist eine Hülse 25 angeformt, in der die zweite Lagerbuchse 26 einliegt. Somit übernimmt der Gehäusedeckel 23 die Abdichtung des elektrischen Motors zur Außenwelt und zentriert die vom Laufrad abgewendete Seite des Rotors. Werden beim Vergießen der Elektronik gleich die Kontakte zum Stator mitisoliert, ist keine separate Dichtung am Motorgehäuse nötig.

In der Montagereihenfolge wird zunächst das Elektronikmodul 11 befestigt und anschließend der Stator 10 montiert. Bei der Montage des Stators wird gleichzeitig der Kontakt 28 zwischen Stator 10 und Elektronikmodul 11 beispielsweise über Schneidklemmkontakte hergestellt. Nun kann die Elektronik geprüft werden.

Die bereits montierte Rotorbaugruppe inklusive des Spalttopofes aus Kunststoff wird von der Pumpengehäuseseite in die Basisplatte 5 eingeschoben. Die Abdichtung zwischen Naß- und Trockenraum übernimmt der O-Ring, der in einer Nut in der Basisplatte 5 sitzt. Durch die metallische Abstützung um den O-Ring und dem Spalttopf 18 werden auf den Spalttopf 18 wirkende Druckkräfte optimal aufgenommen. Der Spalttopf 18 wird nur gering belastet. Zur axialen Abstützung greifen Schnapphaken, angebracht am Lagerträger 14, in die Basisplatte 5. Mit einem Werkzeug können die Schnapphaken gelöst und die Rotorbaugruppe demontiert werden.

Mit diesem Aufbau können unterschiedliche Pumpenleistungen realisiert werden. Dieses kann geschehen durch Verwendung eines anderen Stators und/oder Rotorbaugruppe. Zum anderen kann durch Verwendung eines anderen Laufrades ggf. in Kombination mit einem anderen Kunststoffpumpengehäuseteil der geforderte Betriebspunkt je nach Kundenwunsch optimal eingestellt werden. In jedem Fall können eine Vielzahl von Bauteilen verwendet werden.

## Patentansprüche

1. Elektrisch betriebene Kreiselpumpe, insbesondere für den Einsatz in Heiz- und/oder Kühlkreisläufen, mit einem Pumpengehäuse (4), das eine das Laufrad aufnehmende Laufradkammer stirnseitig bedeckt, mit einem von Wicklungen umgebenen Stator (10) und mit einer einstückigen Montageplatte (3), die einerseits das Pumpengehäuse (4) und andererseits den Stator (10) trägt und die Mittel zur Halterung der Pumpe aufweist, wobei
die einstückige Montageplatte (3) eine senkrecht zur Welle (2) des Laufrades (1) ausgerichtete Basisplatte (5) aufweist, die eine Wand der Laufradkammer bildet, und die Montageplatte eine Aufnahme (9) zur Zentrierung des Stators (10) aufweist, die auf der der Laufradkammer abgewandten Seite der Basisplatte (5) angeformt ist.

2. Kreiselpumpe nach Anspruch 1,
**dadurch gekennzeichnet, daß** die Aufnahme von einem koaxial zur Laufradwelle (2) an die Basisplatte (5) angeformten Zylinder (9) gebildet ist, in den der Stator (10) einsetzbar, insbesondere einpreßbar, ist.

3. Kreiselpumpe nach Anspruch 2,
**dadurch gekennzeichnet, daß** die Montageplatte (3) aus Metall insbesondere aus Blech gezogen oder druckgegossen ist.

4. Kreiselpumpe nach einem der vorherigen Ansprüche,
**dadurch gekennzeichnet, daß** die Aufnahme die Halterung für den Stator bildet.

5. Kreiselpumpe nach einem der vorherigen Ansprüche,
**gekennzeichnet durch,** ein Elektronikmodul (11), das insbesondere eine Steuerelektronik mit Leistungshalbleitern aufweist, wobei das Elektronikmodul (11) auf der dem Laufrad (1) abgewandten Seite der eine Wärmesenke bildenden Basisplatte (5) mit Wärmekontakt gehalten ist.

6. Kreiselpumpe nach einem der vorherigen Ansprüche,
**dadurch gekennzeichnet, daß** die Basisplatte (5) eine koaxial zur Laufradwelle ausgerichtete zentrale Bohrung aufweist, in der ein ein Lager (13) aufnehmender Lagerträger (14) gehalten ist.

7. Kreiselpumpe nach Anspruch 6,
**dadurch gekennzeichnet, daß** die zentrale Bohrung von einer Hülse (15) umgeben ist, die an die Basisplatte (5) angeformt ist und in der der Lagerträger (14) durch Rastmittel (16) gehalten und/oder eingepreßt ist.

8. Kreiselpumpe nach einem der vorherigen Ansprüche,
**dadurch gekennzeichnet, daß** in der Hülse (15) ein insbesondere aus Kunststoff geformter Spalttopf (18) gehalten ist.

9. Kreiselpumpe nach einem der vorherigen Ansprüche,
**dadurch gekennzeichnet, daß** die Hülse (15) einen nach Innen gerichteten Kragen (19) aufweist, gegen den ein nach Außen gerichteter Kragen (20) des eingeschobenen Spalttopfes (18), insbesondere vermittels eines Dichtringes (21), zur Anlage kommt, wobei der Spalttopf (18) vom Lagerträger (14) druckbeaufschlagt wird.

10. Kreiselpumpe nach einem der vorherigen Ansprüche,
**dadurch gekennzeichnet, daß** eine zylindrische Wandung (22) des Lagerträgers den Spalttopf zentriert.

11. Kreiselpumpe nach einem der vorherigen Ansprüche,
**dadurch gekennzeichnet, daß** auf die Basisplatte (5) ein insbesondere aus Kunststoff geformter Gehäusedeckel (23) aufsetzbar ist, der die auf der elektrischen Seite der Basisplatte (5) angeordneten Komponenten abdeckt.

12. Kreiselpumpe nach Anspruch 11 ,
**dadurch gekennzeichnet, daß** der Gehäusedeckel (23) an der Außenfläche des den Stator (10) aufnehmenden Zylinders (9) anliegt.

13. Kreiselpumpe nach einem der vorherigen Ansprüche,
**dadurch gekennzeichnet, daß** das Pumpengehäuse eine insbesondere aus Kunststoff gefertigte, Gehäuseschale (4) aufweist, die auf die Basisplatte (5) aufgesetzt und über einen Dichtring (6) abgedichtet ist.

14. Kreiselpumpe nach einem der vorherigen Ansprüche,
**dadurch gekennzeichnet, daß** der Antrieb mittels eines elektronisch kommutierten Gleichstrommotors geschieht.

15. Kreiselpumpe nach einem der vorherigen Ansprüche,
**dadurch gekennzeichnet, daß** der Anschlußstecker (12) für die elektrische Versorgung auf der dem Laufrad (1) zugewandten Seite der Basisplatte (5) angebracht ist.

16. Verwendung der Kreiselpumpe nach einem der vorherigen Ansprüche zur Förderung des Mediums im Kühlkreislauf eines Kraftfahrzeuges.

## Claims

1. Electrically driven rotary pump, particularly one for use in heating and/or cooling circuits, with a pump housing (4) that covers an end face of a rotor chamber that takes up a rotor, with a stator (10) surrounded by windings and with a single-piece mounting plate (3) that carries both the pump housing (4) and the stator (10) and that has means of holding the pump, whereby the single-piece mounting plate (3) has a base plate (5) aligned vertically in relation to the shaft (2) of the rotor (1), the said base plate (5) forming the wall of the rotor chamber, and the mounting plate has an uptake means (9), for centring the stator (10), on which the side of the base plate (5) that faces away from the rotor chamber is formed.

2. Rotary pump in accordance with claim 1,
**characterized in that** the uptake means is formed by a cylinder (9), into which the stator (10) can be inserted, particularly by forcing it in, the said cylinder (9) being formed, coaxial with the rotor shaft (2), on the base plate (5).

3. Rotary pump in accordance with claim 2,
**characterized in that** the mounting plate (3) is drawn or die cast from metal, particularly from sheet metal.

4. Rotary pump in accordance with one of the preceding claims,
**characterized in that** the uptake means forms the holding means for the stator.

5. Rotary pump in accordance with one of the preceding claims,
**characterized in that** an electronics module (11), that has, in particular, control electronic means with output semi-conductors, whereby the electronics module (11) is held on the side, of the base plate (5) with heat contact and forming a heat sink, facing away from the rotor (1).

6. Rotary pump in accordance with one of the preceding claims,
**characterized in that** the base plate (5) has a central boring, that is coaxial in relation to the rotor shaft, a bearing flange (14) that takes up a bearing (13) being held in the central boring.

7. Rotary pump in accordance with claim 6,
**characterized in that** the central boring is surrounded by a bushing (15) that is formed on the base plate (5) and in which the bearing flange (14) is held and/or forced by stop means.

8. Rotary pump in accordance with one of the preceding claims,
**characterized in that** a gap casing (18), made in particular of plastic or other synthetic material, is held in the bushing (15).

9. Rotary pump in accordance with one of the preceding claims,
**characterized in that** the bushing (15) has a collet (19) that is directed inwards, against which a collet (20), of the gap casing (18), that is directed outwards, comes to lie, particularly by means of a sealing ring (21), whereby the gap casing (18) has pressure applied to it by the bearing flange (14).

10. Rotary pump in accordance with one of the preceding claims,
**characterized in that** a cylindrical surface (22) of the bearing flange centres the gap casing.

11. Rotary pump in accordance with one of the preceding claims,
**characterized in that** the housing cover (23) made, in particular, from plastic or other synthetic material, can be set on the base plate (5), the said housing cover (23) covering the components disposed on the electrical side of the base plate (5).

12. Rotary pump in accordance with claim 1,
**characterized in that** the housing cover (23) lies on the outer surface of the cylinder (9) that takes up the stator (10).

13. Rotary pump in accordance with one of the preceding claims,
**characterized in that** the pump housing has a cover (4) that is set on the base plate (5) and that is sealed by means of a sealing ring (6).

14. Rotary pump in accordance with one of the preceding claims,
**characterized in that** the driving occurs by means of an electronically commutated DC motor.

15. Rotary pump in accordance with one of the preceding claims,
**characterized in that** the connection socket (12) for the electricity supply is on the side of the base plate (5) facing the rotor (1).

16. Rotary pump in accordance with one of the preceding claims for conveying the medium in the cooling circuit of a vehicle.

## Revendications

1. Pompe centrifuge entraînée électriquement, en particulier pour la mise en oeuvre dans des circuits de chauffage et/ou de refroidissement, avec un carter de pompe (4) qui recouvre du côté frontal une chambre de roue mobile recevant une roue mobile, avec un stator (10) entouré par des bobinages et avec une plaque de montage (3) d'une seule pièce qui porte d'une part le carter de pompe (4) et d'autre part le stator (10) et qui présente des moyens pour la fixation de la pompe, la plaque de montage (3) d'une seule pièce présentant une plaque de base (5) alignée orthogonalement à l'arbre (2) de la roue mobile (1), qui forme une paroi de la chambre de roue mobile, et la plaque de montage présentant un logement (9) pour le centrage du stator (10), qui est conformé sur le côté de la plaque de base (5) écarté de la chambre de roue mobile.

2. Pompe centrifuge selon la revendication 1,
**caractérisée par le fait que** le logement est formé par un cylindre (9) conformé sur la plaque de base (5) coaxialement à l'arbre (2) de la roue mobile, dans lequel le stator (10) peut être inséré, en particulier enfoncé.

3. Pompe centrifuge selon la revendication 2,
**caractérisée par le fait que** la plaque de montage (3) est emboutie ou moulée sous pression en métal, en particulier en tôle.

4. Pompe centrifuge selon l'une des revendications précédentes,
**caractérisée par le fait que** le logement forme la fixation pour le stator.

5. Pompe centrifuge selon l'une des revendications précédentes,
**caractérisée par** un module électronique (11) qui présente en particulier une électronique de commande avec des semi-conducteurs de puissance, le module électronique (11) étant maintenu en contact thermique sur le côté écarté de la roue mobile (1) de la plaque de base (5) formant un puits thermique.

6. Pompe centrifuge selon l'une des revendications précédentes,
**caractérisée par le fait que** la plaque de base (5) présente un alésage central aligné coaxialement à l'arbre de la roue mobile, dans lequel est maintenu un support de palier (14) recevant un palier (13).

7. Pompe centrifuge selon la revendication 6,
**caractérisée par le fait que** l'alésage central est entouré par un manchon (15) qui est conformé sur la plaque de base (5) et dans lequel le support de palier (14) est maintenu par des moyens d'encliquetage (16) et/ou enfoncé.

8. Pompe centrifuge selon l'une des revendications précédentes,
**caractérisée par le fait qu'**un pot d'entrefer (18), en particulier formé en matière synthétique, est maintenu dans le manchon (15).

9. Pompe centrifuge selon l'une des revendications précédentes,
**caractérisée par le fait que** le manchon (15) présente une collerette (19) dirigée vers l'intérieur contre laquelle vient en appui, en particulier au moyen d'une bague d'étanchéité (21), une collerette (20) dirigée vers l'extérieur du pot d'entrefer (18) introduit, le pot d'entrefer (18) étant soumis à une pression par le support de palier (14).

10. Pompe centrifuge selon l'une des revendications précédentes,
**caractérisée par le fait qu'**une paroi (22) cylindrique du support de palier centre le pot d'entrefer.

11. Pompe centrifuge selon l'une des revendications précédentes,
**caractérisée par le fait qu'**un couvercle de carter (23), en particulier formé en matière synthétique, peut être monté sur la plaque de base (5), lequel recouvre les composants disposés sur le côté électrique de la plaque de base (5).

12. Pompe centrifuge selon la revendication 11,
**caractérisée par le fait que** le couvercle de carter (23) est en appui sur la surface extérieure du cylindre (9) recevant le stator (10).

13. Pompe centrifuge selon l'une des revendications précédentes,
**caractérisée par le fait que** le carter de pompe présente une coque de carter (4), en particulier fabriquée en matière synthétique, qui est montée sur la plaque de base (5) et étanchée par l'intermédiaire d'une bague d'étanchéité (6).

14. Pompe centrifuge selon l'une des revendications précédentes,
**caractérisée par le fait que** l'entraînement a lieu au moyen d'un moteur à courant continu commuté électroniquement.

15. Pompe centrifuge selon l'une des revendications précédentes,
**caractérisée par le fait que** le connecteur de raccordement (12) pour l'alimentation électrique est monté sur le côté de la plaque de base (5) tourné vers la roue mobile (1).

16. Utilisation de la pompe centrifuge selon l'une des revendications précédentes pour le transport du liquide dans le circuit de refroidissement d'un véhicule automobile.
